# EUROPÄISCHE PATENTSCHRIFT

(11) **EP 0 956 551 B1**
(45) Veröffentlichungstag und Bekanntmachung des Hinweises auf die Patenterteilung: **27.03.2002**
(21) Anmeldenummer: 98947508.2
(22) Anmeldetag: 03.09.1998
(51) Int. Cl.: G09B 9/14, G09B 9/04

(54) **BEWEGUNGSSIMULATOR**
MOTION SIMULATOR
SIMULATEUR DE MOUVEMENT

(30) Priorität: 09.09.1997 DE 29716148 U
(43) Veröffentlichungstag der Anmeldung: 17.11.1999
(73) Patentinhaber: Otto, Stefan, 32694 Dörentrup (DE)
(72) Erfinder: Otto, Stefan, 32694 Dörentrup (DE)
(74) Vertreter: TER MEER STEINMEISTER & PARTNER GbR
(86) Internationale Anmeldenummer: EP9805583
(87) Internationale Veröffentlichungsnummer: WO9913445

(56) Entgegenhaltungen:
- WO-A-94/10665
- FR-A- 2 745 656

## Beschreibung

Die Erfindung betrifft einen Bewegungssimulator mit einer Kabine, die sich mit mindestens drei jeweils um eine waagerechte Achse schwenkbaren Füßen auf dem Boden abstützt und für jeden Fuß einen Schwenkantrieb aufweist.

Bewegungssimulatoren werden häufig als Flug- oder Fahrsimulatoren eingesetzt, beispielsweise als Trainingsgerät bei der Ausbildung von Piloten oder auch als Spielgerät in der Unterhaltungsindustrie. Das Grundprinzip solcher Bewegungssimulatoren besteht darin, daß die Kabine um eine Längsachse und/oder Querachse gekippt wird, um durch Ausnutzung der Schwerkraft die beim Beschleunigen, Bremsen oder bei Kurvenfahrten auftretenden Trägheitskräfte zu simulieren. Die Kabine muß deshalb so aufgehängt sein, daß sie innerhalb eines gewissen Bereichs Bewegungen in mindestens zwei, vorzugsweise drei oder mehr Freiheitsgraden ausführen kann.

Gebräuchlich sind Aufhängungen mit Hilfe sogenannter Hexapoden, die eine Bewegung in allen sechs Freiheitsgraden ermöglichen, jedoch konstruktiv sehr aufwendig sind und auch eine aufwendige Steuerung erfordern. Außerdem haben diese Aufhängungen den Nachteil, daß die Hexapoden stabil im Boden verankert werden müssen und relativ sperrig sind, so daß eine entsprechend große Stellfläche benötigt wird und die Kabine eine relativ große Einstiegshöhe aufweisen muß.

Aus EP-B-0 137 870 ist ein Bewegungssimulator der eingangs genannten Art bekannt, bei dem die Kabine an drei in der Draufsicht T-förmig angeordneten Füßen aufgehängt ist. Jeder Fuß ist als Schere ausgebildet und hat einen annährend vertikalen Schenkel, der sich auf dem Boden abstützt und dessen oberes Ende über eine waagerechte Scharnierachse mit einem annährend horizontalen Schenkel verbunden ist, dessen freies Ende seinerseits gelenkig mit der Kabine verbunden ist. Jedem Fuß ist als Schwenkantrieb ein Stellzylinder zugeordnet, mit dem sich der Öffnungswinkel der Schere und damit die Höhe des betreffenden Anlenkpunktes der Kabine über dem Boden variieren läßt. Auf diese Weise werden drei Freiheitsgrade der Bewegung ermöglicht, nämlich Drehungen um die Längsachse und um die Querachse sowie eine Translation in vertikaler Richtung. Diese Konstruktion ermöglicht es zwar, die Kabine abzusenken, um die Einstiegshöhe zu verringern, hat jedoch den Nachteil, daß eine relativ aufwendige Gelenkkonstruktion erforderlich ist. Außerdem müssen die Bewegungen der beiden gegenübeliegenden Füße so koordiniert werden, daß die Schwenkachse des dritten Fußes stets ihre Lage im Raum beibehält. Dies erfordert eine entsprechend aufwendige Steuerung. Da die Schwenkachsen der drei Füße stets parallel zur Bodenfläche orientiert sind und außerdem die beiden parallelen Schwenkachsen der einander gegenüberliegenden Füße stets rechtwinklig zur Schwenkachse des dritten Fußes orientiert sind, kann die Kabine keine Translationbewegungen in der horizontalen Ebene ausführen.

Aus FR 2 745 656 A ist ein ähnlicher Bewegungssimulator bekannt, bei dem zwei Füße mit Rädern versehen sind, so daß sich der Bewegungssimulator um eine durch den dritte Fuß gehende vertikale Achse drehen läßt.

Aufgabe der Erfindung ist es, einen Bewegungssimulator der eingangs genannten Art zu schaffen, der einen einfachen Aufbau aufweist, einfach steuerbar ist und dennoch eine wirklichkeitsnahe Bewegungssimulation ermöglicht.

Diese Aufgabe wird erfindungsgemäß mit den in Patentanspruch 1 angegebenen Merkmalen gelöst.

Bei dieser Lösung trägt jeder Fuß ein Rad, mit dem er auf dem Boden abrollt.

Wenn bei dem erfindungsgemäßen Bewegungssimulator die Kabine an einem der drei Unterstützungspunkte abgesenkt werden soll, so braucht nur der an diesem Unterstützungspunkt angreifende Fuß relativ zur Kabine entsprechend verschwenkt zu werden, wobei er mit seinem Rad auf dem Boden abrollt. Der gesamte Bewegungssimulator führt dann eine Kippbewegung um die Achse aus, die durch die Aufstandspunkte der beiden übrigen Räder definiert wird. Durch Verschwenken der drei Füße wird so eine Bewegung in drei Freiheitsgraden ermöglicht. Diese Freiheitsgrade, die durch den Schwenkwinkel jedes Fußes relativ zur Kabine definiert sind, können völlig unabhängig voneinander variiert werden, so daß eine äußerst einfache und störungsunanfällige Steuerung ermöglicht wird. Die gelenkigen Verbindungen zwischen der Kabine und den Füßen braucht keine Kugel- oder Kardangelenke zu sein, sondern können einfach als Scharniergelenke ausgebildet sein, so daß eine sehr einfache und robuste Konstruktion des Bewegungssimulators erreicht wird.

Wenn alle drei Füße in eine annährend waagerechte Position gebracht werden, ist die Kabine fast bis auf den Boden abgesenkt, so daß eine sehr niedrige Einstiegshöhe erreicht wird und folglich keine Leitern oder dergleichen zum Besteigen oder Verlassen der Kabine erforderlich sind. Durch synchrones Verschwenken aller drei Füße läßt sich die Kabine in Vertikalrichtung bewegen, so daß auch kurzzeitige vertikale Beschleunigungen wie beispielsweise Bodenwellen oder dergleichen simuliert werden können.

Während der Bewegungssimulation befindet sich die Kabine in der Regel in einer angehobenen Position oberhalb des Bodens. Da die Schwenkachse, um die die Kabine beim Variieren eines Freiheitsgrades gekippt wird, auf Bodenniveau liegt, führt die Kabine bei einer solchen Kippbewegung auch eine leichte horizontale Translation aus. Dies ist für die Erzeugung eines wirklichkeitsnahen Bewegungseindrucks überaus vorteilhaft.

Ein weiterer Vorteil der Erfindung besteht darin, daß der Bewegungssimulator nicht starr im Boden verankert zu werden braucht, sondern problemlos auf jeder beliebigen waagerechten Bodenfläche aufgestellt werden kann.

Der Schwerpunkt des Bewegungssimulators verbleibt stets über demselben Punkt auf der Bodenfläche, und alle Füße bewegen sich relativ zu der Projektion des Schwerpunkts auf die Bodenfläche.

Vorteilhafte Ausgestaltungen der Erfindung ergeben sich aus den Unteransprüchen.

Bevorzugt ist die Schwenkachse jedes Fußes zu keiner der Schwenkachsen der beiden übrigen Füße parallel. Dies hat zur Folge, daß auch die Laufrichtungen der drei an den Füßen angebrachten Räder voneinander verschieden sind, so daß der Bewegungssimulator, solange alle drei Räder Bodenberührung haben, in keiner Richtung auf dem Boden verfahren werden kann.

Auch während des Betriebs ist somit ein "Auswandern" des Bewegungssimulators ausgeschlossen. In einer besonders bevorzugten Ausführungsform sind die drei Füße sternförmig in Winkelabständen von 120° an der Kabine angeordnet.

Die Räder können gummibereift sein, so daß eine rutschfeste Abstützung auf dem Boden gewährleistet ist und zugleich eine gewisse Dämpfung von Vibrationen erreicht wird.

Die Schwenkantriebe für die Füße werden bevorzugt durch Stellzylinder gebildet, die gelenkig zwischen der Kabine und dem jeweiligen Fuß angeordnet sind. Wahlweise oder zusätzlich können als Schwenkantrieb jedoch auch Antriebe für die Räder der drei Füße vorgesehen sein.

Mit Hilfe von Messwertaufnehmern, die die Position jedes Fußes relativ zur Kabine erfassen und beispielsweise in die Schwenkantriebe integriert sein können, ist es möglich, die aktuelle Lage der Kabine im Raum jederzeit in Echtzeit zu erfassen, so daß die Steuerung eine Rückmeldung über die vorgenommenen Lageänderungen erhält. Alternativ oder zusätzlich ist es möglich, die Orientierung der Kabine mit Hilfe eines Gravitationssensors oder durch Satellitenpeilung zu erfassen. Die Höhe der Kabine über dem Boden kann beispielsweise mit Hilfe eines Ultraschall-Entfernungsmessers überwacht werden. Schließlich ist es auch möglich, sämtliche Daten über die Lage im Raum mit Hilfe eines GPS-Systems zu erfassen.

Im folgenden wird ein bevorzugtes Ausführungsbeispiel anhand der Zeichnung näher erläutert.

Es zeigen:
- Figur 1: eine schematische Seitenansicht des Bewegungssimulators in der Normalstellung;
- Figur 2: eine Ansicht des Bewegungssimulators in gekippter Stellung;
- Figur 3: eine Ansicht des Bewegungssimulators in einer abgesenkten Einstiegposition; und
- Figur 4: den Bewegungssimulator in der Draufsicht.

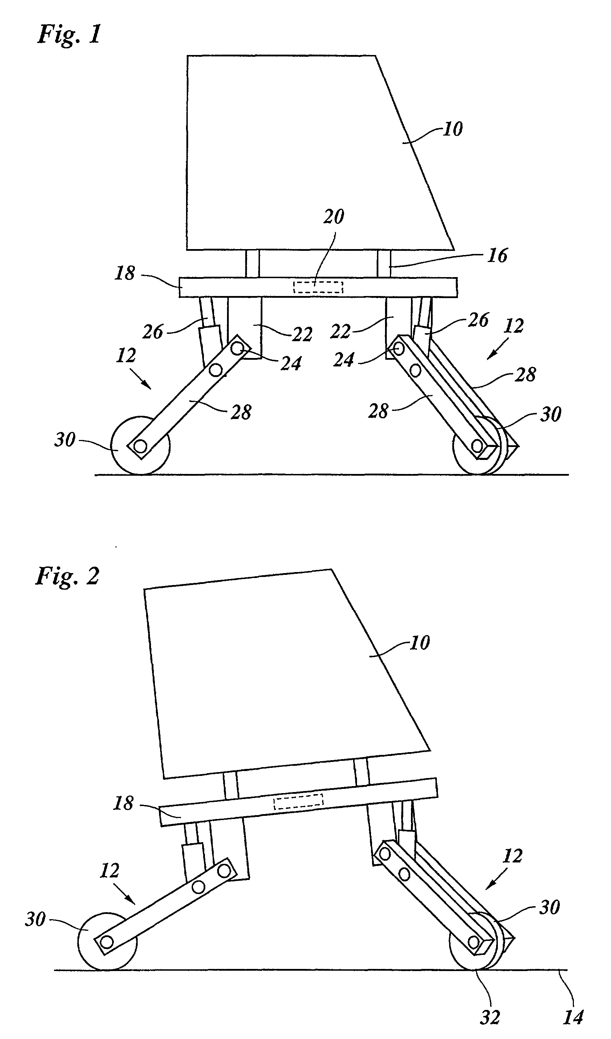

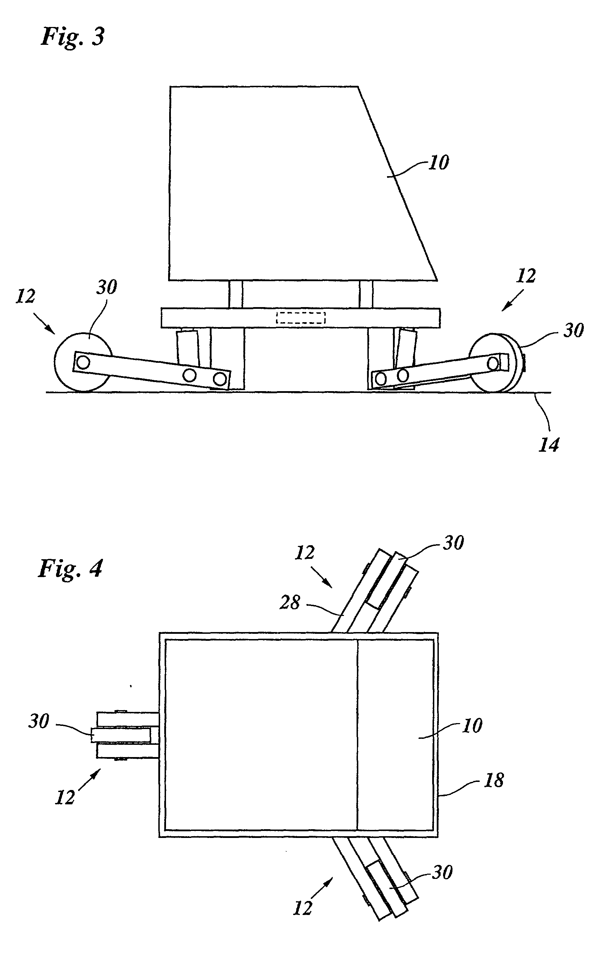

Der in Figur 1 gezeigte Bewegungssimulator weist eine Kabine 10 auf, die sich mit drei Füßen 12 auf dem Boden 14 abstützt. Die drei Füße 12, von denen von Figuren 1 bis 3 jeweils nur zwei zu erkennen sind, sind im Grundriß sternförmig in Winkelabständen von 120° um die Mitte der Kabine angeordnet, wie aus Figur 4 ersichtlich ist.

Die Kabine 10 ist im gezeigten Beispiel mit Hilfe von Stützen 16 starr auf einer Plattform 18 montiert, in die ein Schwerkraftsensor 20 zur Messung der Ist-Neigung der Plattform 18 und damit der Kabine 10 integriert ist. Die Plattform 18 weist an der Unterseite drei Montageböcke 22 auf, an denen jeweils einer der Füße 12 mit Hilfe eines Scharniergelenks 24 schwenkbar befestigt ist. Als Schwenkantrieb ist für jeden Fuß ein pneumatischer oder hydraulischer Stellzylinder 26 vorgesehen, der mit einem Ende gelenkig an dem Fuß 12 und mit dem anderen Ende gelenkig an der Plattform 18 angebracht ist. Auch die Gelenke an den beiden Enden jedes Stellzylinders 26 können als einfache Scharniergelenke ausgebildet sein. Anstelle eines Stellzylinders kann auch ein anderer Schwenkantrieb, beispielsweise ein Elektromotor oder dergleichen eingesetzt werden.

Jeder Fuß 12 wird im gezeigten Beispiel durch zwei parallele Arme 28 gebildet, die den zugehörigen Montagebock 22 und den Stellzylinder 26 zwischen sich aufnehmen. Am unteren Ende trägt jeder Fuß ein Rad 30, das drehbar zwischen den Armen 28 gelagert ist, so daß es auf den Boden 14 abrollen kann.

Die Scharniergelenke 24 definieren jeweils eine Schwenkachse, die in einer zu der Plattform 18 parallelen Ebene liegt und rechtwinklig zu dem betreffenden Fuß 12 verläuft. In der in Figur 1 gezeigten Normalstellung, in der die Plattform 18 waagerecht orientiert ist, verlaufen somit auch die durch die Scharnierachsen 24 gebildeten Achsen waagerecht. Die Achsen der Räder 30 sind jeweils zur Achse des zugehörigen Scharniergelenks parallel.

Wenn einer der Füße 12 verschwenkt wird, wie beispielsweise der linke Fuß 12 in Figur 2, so bewegt sich das auf dem Rad 30 abrollende untere Ende dieses Fußes radial nach außen oder nach innen. Der gesamte Bewegungssimulator kippt dabei um eine in der Ebene des Bodens 14 liegende Achse, die durch die Aufstandspunkte 32 der beiden anderen Räder 30 definiert ist. Durch Kombination der Schwenkbewegungen aller drei Füße 12 läßt sich die Kabine 10 in jeder gewünschten Richtung kippen.

Außerdem läßt sich die Kabine 10 durch synchrones Verschwenken aller drei Füße 12 in der Höhe verstellen. Als Beispiel zeigt Figur 3 den Zustand, in dem die Kabine 10 maximal abgesenkt ist, so daß ein bequemes Ein- und Aussteigen ermöglicht wird.

Der erfindungsgemäße Bewegungssimulator läßt sich ohne größere Vorbereitungen auf jeder beliebigen ebenen Bodenfläche 14 aufstellen und kann mobil zum gewünschten Einsatzort transportiert werden. Hierzu brauchen lediglich zwei der drei Füße 12 angehoben zu werden, so daß sich der Bewegungssimulator mit dem Rad 30 des dritten Fußes verfahren läßt.

Die Füße 12 können so unter der Plattform 18 angeordnet sein, daß einerseits eine ausreichende Standsicherheit gewährleistet ist, andererseits jedoch nur eine vergleichsweise geringe Stellfläche benötigt wird, wie in Figur 4 zu erkennen ist. Gewünschtenfalls können die Füße 12 auch teleskopierbar sein, so daß sie eingefahren werden können, wenn die Kabine 10 in die in Figur 3 gezeigte Position abgesenkt wird. Hierdurch wird die benötigte Stellfläche weiter verringert.Zusätzliche Freiheitsgrade der Bewegung lassen sich beispielsweise dadurch realisieren, daß die starren Stützen 16 in Figur 1 durch einen X-Y- und/oder einen Drehantrieb ersetzt werden, so daß im Extremfall eine Bewegung in allen sechs Freiheitsgraden ermöglicht wird.

## Patentansprüche

1. Bewegungssimulator mit einer Kabine (10), die sich mit mindestens drei jeweils um eine im wesentlichen waagerechte Achse schwenkbaren Füßen (12) auf den Boden (14) abstützt und für jeden Fuß einen Schwenkantrieb (26) aufweist, **dadurch gekennzeichnet, daß** jeder Fuß (12) ein Rad (30) trägt, mit dem er auf dem Boden (14) abrollt.

2. Bewegungssimulator nach Anspruch 1, **dadurch gekennzeichnet, daß** keine der Schwenkachsen der Füße (12) zu der Schwenkachse irgendeines anderen Fußes parallel ist.

3. Bewegungssimulator nach Anspruch 2, **dadurch gekennzeichnet, daß** drei Füße (12) im Grundriß sternförmig in Winkelabständen von 120° angeordnet sind.

4. Bewegungssimulator nach einem der vorstehenden Ansprüche, **dadurch gekennzeichnet, daß** jeder Fuß (12) einen Arm (28) aufweist, dessen oberes Ende schwenkbar an einer die Kabine (10) tragenden Plattform (18) montiert ist, und an dessen unterem Ende das Rad (30) angeordnet ist, das sich beim Verschwenken des Armes (28) radial nach außen oder nach innen bewegt.

## Claims

1. Movement simulator having a cabin (10) which is supported on the ground (14) by at least three feet (12) which are each pivotable about a substantially horizontal axis, and which cabin has a pivot drive (26) for each foot, **characterised in that** each foot (12) carries a wheel (30) with which it rolls along the ground (14).

2. Movement simulator according to claim 1, **characterised in that** none of the pivot axes of the feet (12) is parallel with the pivot axis of any other foot.

3. Movement simulator according to claim 2, **characterised in that** three feet (12) are arranged to be star-shaped in outline at angular distances of 120°.

4. Movement simulator according to any one of the preceding claims, **characterised in that** each foot (12) has an arm (28), the upper end of which is mounted to be pivotable on a platform (18) carrying the cabin (10), and at the lower end of which is arranged the wheel (30) which moves radially outwards or inwards when the arm (28) is pivoted.

## Revendications

1. Simulateur de mouvement avec une cabine (10) qui prend appui sur le sol (14), par au moins trois pieds (12) qui peuvent pivoter autour d'un axe sensiblement horizontal, et qui comporte un dispositif d'entraînement en pivotement (26) pour chaque pied, **caractérisé en ce que** chaque pied (12) porte une roue (30) avec laquelle il roule sur le sol (14).

2. Simulateur de mouvement selon la revendication 1, **caractérisé en ce qu'**aucun des axes de pivotement des pieds (12) n'est parallèle à l'axe de pivotement d'un autre pied quelconque.

3. Simulateur de mouvement selon la revendication 2, **caractérisé en ce que** trois pieds (12) sont disposés en étoile dans le plan horizontal, à des distances angulaires de 120°.

4. Simulateur de mouvement selon l'une des revendications précédentes, **caractérisé en ce que** chaque pied (12) comporte un bras (28) dont l'extrémité supérieure est montée pivotante sur une plateforme (18) portant la cabine (10), et à l'extrémité inférieure duquel est disposée la roue (30) qui se déplace radialement vers l'extérieur ou vers l'intérieur, pendant le pivotement du bras (28).
